# EUROPÄISCHE PATENTSCHRIFT

(11) **EP 1 147 701 B1**
(45) Veröffentlichungstag und Bekanntmachung des Hinweises auf die Patenterteilung: **28.07.2004**
(21) Anmeldenummer: 01107220.4
(22) Anmeldetag: 23.03.2001
(51) Int. Cl.: A01F 12/10, A01F 7/06

(54) **Selbstfahrender Mähdrescher**
Self-propelled combine
Moissonneuse-batteuse automotrice

(30) Priorität: 19.04.2000 DE 10019667
(43) Veröffentlichungstag der Anmeldung: 24.10.2001
(73) Patentinhaber: CLAAS Selbstfahrende Erntemaschinen GmbH, 33428 Harsewinkel (DE)
(72) Erfinder: Schwersmann, Berthold, 49186 Bad Iburg (DE)

(56) Entgegenhaltungen:
- EP-A- 0 173 223
- EP-A- 0 591 688
- FR-A- 2 145 300
- US-A- 4 197 693
- US-A- 4 291 709
- US-A- 4 875 890

## Beschreibung

Die Erfindung bezieht sich auf einen selbstfahrenden Mähdrescher mit einem Fahrwerk, einem Rahmen, Arbeitswerkzeugen zur Aufnahme, Beförderung, Bearbeitung und Abgabe des Ernteguts und Antriebsvorrichtungen zum Antrieb der Arbeitsorgane, die Arbeitsorgane weisen zumindest eine nach den Tangentialflussprinzip arbeitenden Dresch- oder Einlegetrommel und zwei nachgeschaltete, nach dem Axialflussprinzip arbeitende Trennrotoren, die in diese umfassenden Rotorgehäusen rotierend angetrieben gelagert sind, auf, und auf den Trennrotoren in ihrem in Gutflussrichtung gesehen vorderen Bereich sind Förderwerkzeuge angebracht, die bei deren Rotationsbewegung eine im wesentlichen zylindrische Grundform der Außenkontur der mit den Förderwerkzeugen bestückten Trennrotoren ergeben, und der Mantel der Rotorkerne verjüngt sich im vorderen Bereich konisch nach vorn.

Ein solcher selbstfahrender Mähdrescher ist beispielsweise aus der Schrift EP-A-0 591 688 bekannt. Bei der Ausgestaltung der dort offenbarten Übergabezone zur Beförderung des Erntegutes von der Übergabetrommel, die das Erntegut in radialer Richtung passiert, in die Gehäuse der Trennrotoren, in denen sich das Erntegut in axialer Richtung bewegt, kann es unter ungünstigen Gutflussbedingungen zu einer nicht optimalen Annahme des Erntegutes durch die Trennrotoren kommen. Es ist die Aufgabe der vorliegenden Erfindung, das Gutflussverhalten in dieser Zone zu optimieren.

Die Aufgabe wird gelöst, indem Seitenbleche der Rotorgehäuse im vorderen Annahmebereich in einer horizontalen Lage in Gutflussrichtung gesehen konvergierend zum zugeordneten Trennrotor hin angeordnet sind und so im Verhältnis zum Rotorkern eine sich in Förderrichtung verengende Annahmezone bilden, in der nur ein Teilbereich dieser Annahmezone von den Förderwerkzeugen förderwirksam erfassbar ist.

Bei einer solchen Ausgestaltung der Übergabezone ergeben sich seitlich neben den Trennrotoren Aufnahmetaschen, in die das Erntegut von der Dresch- oder Einlegetrommel eingeworfen werden kann. Während bei der Ausführung gemäß dem Stand der Technik die Vorderflächen der auf den Trennrotoren angeordneten Schneckenbleche zunächst das zugeförderte Erntegut abstoppen, bevor es von diesen erfasst und abgefördert wird, erlauben es die seitlich gelegenen Taschen, dass das Erntegut in einen seitlich neben den Trennrotoren gelegenen Bereich gefördert werden kann, ohne dass es zunächst abgebremst wird und erneut beschleunigt werden muss. Die seitliche Aufweitung der Rotorgehäuse erlaubt es, eine Annahmezone zu schaffen, die sich nahezu über die volle Breite der Dresch- oder Einlegetrommel erstreckt, obwohl diese deutlich größer ist als die Summe der Durchmesser der beiden Rotorgehäuse. Auf diese Weise werden energiezehrende scharfe Umlenkungen des Gutstroms vermieden, es tritt kaum eine Querförderung von Erntegut auf. Die Konvergenz der seitlichen Aufweitung auf den Trennrotor zu zwingt das Erntegut trotzdem seitlich zunehmend in den Wirkungsbereich der Arbeitsorgane in Form von Schneckenblechen und sorgt so für eine gute Abförderung des Erntegutes. Es ist auf diese Weise möglich, den Trennrotor auch seitlich zu beschicken. Die Aufnahmetaschen sind sehr schluckfreudig und können Schwankungen in der Menge des zugeführten Erntegutes ausgleichen, ohne das es zu Gutstauungen kommt.

In vorteilhafter Weiterbildung der Erfindung wird vorgeschlagen, daß auf der Innenseite eines Seitenblechs, an dem sich der zugeordnete Trennrotor aufwärts rotierend entlang bewegt, eine oder mehrere Leitschienen angebracht sind, die in einem steilen Winkel nach oben gerichtet, an ihrer Spitze schlank und sich in Förderrichtung zunehmend erhebend ausgebildet sind. Dort, wo sich der Rotor aufwärts bewegt, ist es wichtig, einen Gegenhalter auszubilden, gegen den das zugeförderte Erntegut gedrückt, von den auf den Trennrotoren angeordneten Förderwerkzeugen erfasst und sodann abgefördert wird. Wegen der Aufwärtsrichtung und dem Schub in axialer Richtung neigt das Stroh dazu, sich der Abförderung zu widersetzen.

Die Leitschienen geben dem Erntegut einen nach oben und in axialer Richtung weisenden Impuls, wobei die zunehmende Erhebung den Impuls verstärkt, ohne dadurch die Aufnahmetasche im vorderen Bereich zu versperren. Die Anordnung von solchen passiven Elementen auf den entsprechenden Seitenblechen ist besonders wichtig, weil hier in diesem Bereich sonst ein entsprechender nach oben und in axialer Richtung weisender Impuls fehlen würde, da die Förderwerkzeuge diesen Bereich nicht förderwirksam erfassen.

Andererseits müssen auf der Innenseite eines Seitenblechs, an dem sich der zugeordnete Trennrotor abwärts rotierend entlang bewegt, keine Leitschienen angebracht sein. An dieser Stelle fördert der Trennrotor nach unten, wohin das Erntegut auch schon schwerkraftbedingt hingezogen wird. Hier treten keine Schwierigkeiten auf, das Erntegut mit den auf dem Trennrotor angeordneten Förderwerkzeugen zu erfassen und abzufördern.

Weiter wird vorgeschlagen, dass den beiden mittigen Seitenblechen ein längs angeordneter Trennkeil vorgeordnet ist, der bereichsweise an den Hüllkreis der Dresch- oder Einlegetrommel angepasst ist und sich vom Bodenbereich bis etwa in Höhe der Drehachsen der Trennrotoren erstreckt. Durch den Trennkeil wird der Gutstrom im Zusammenwirken mit der Dresch- oder Einlegetrommel in zwei Teilgutströme getrennt. Das Erntegut gleitet über den Trennkeil zu einem der beiden Rotorgehäuse. Bei langhalmigem Material werden die Stengel von einem der beiden Trennrotoren erfasst und über den Trennkeil in das entsprechende Rotorgehäuse eingezogen. Damit das Erntegut nicht geschnitten oder beschädigt wird, ist es vorteilhaft, wenn der Trennkeil eine abgerundete Oberfläche aufweist.

Gemäß einer anderen Weiterbildung der Erfindung beträgt der Abstand zwischen dem Hüllkreis der Dresch- oder Einlegetrommel und den auf den Trennrotoren angeordneten Förderwerkzeugen maximal bis zum Dreifachen der höchsten Erhebung des Trennkeils über die benachbarten Leitblechflächen. Je geringer der Abstand zwischen Trennkeil und Dreschoder Einlegetrommel ist, umso wirkungsvoller wird der Gutstrom im Bereich des Trennkeils aufgeteilt. Andererseits sollte der Abstand zwischen der Dresch- oder Einlegetrommel und den Förderwerkzeugen der Trennrotoren nicht zu groß werden, da sonst wertvolle Abscheidefläche verloren geht und der Gutfluss gestört werden könnte. Soweit sich der Trennkeil zwischen der Dresch- oder Einlegetrommel und den Förderwerkzeugen erhebt, muß noch ein gewisser Spielraum zur Dresch- oder Einlegetrommel verbleiben, damit das Stroh sich über den Trennkeil in das eine oder andere Rotorgehäuse verteilen kann. Ein größerer Spielraum als das Doppelte der höchsten Erhebung des Treimkeils ist jedoch im Regelfall nicht erforderlich.

Desweiteren sollte die den Trennrotoren vorgelagerte Dresch- oder Einlegetrommel in ihrer relativen Höhenlage so vor den Trennrotoren angeordnet sein, dass sie das Erntegut annähernd mittig in den Bereich zwischen den Rotationsachsen der Trennrotoren und den bodenseitigen Zuführblechen der Übergabezone abfördert. Bei einer solchen Anordnung ist eine gute Übergabe des Ernteguts mit einer gewissen Streuung nach oben und unten gewährleistet. In dieser Höhe sind die Aufnahmetaschen breit genug ausbildbar, um Erntegut aufnehmen zu können. Andererseits können bei einer Aufhängung von oben die Lagerarme nicht den Gutfluss behindern.

Besonders unterstützt wird die Zuführung von Erntegut auch, wenn ein die beiden Seitenbleche eines Rotorgehäuses verbindendes Bodenblech aus einer dreieckigen oder trapezförmigen ebenen Fläche besteht, deren breite Basis vorn angeordnet ist und die bis in den Wirkbereich der Förderwerkzeuge eines Trennrotors schmaler wird, sowie sich seitlich an die ebene Fläche an einer Nahtstelle anschließende Übergangsflächen, die zum Anschluß an die Unterkante der Seitenbleche nach oben gebogen oder gekantet sind und sich in Förderrichtung verbreitern. Bei einer solchen Ausbildung liegt die Nahtstelle zwischen der ebenen Fläche und den Übergangsflächen außerhalb eines zum Trennrotor konzentrischen und die Übergangsfläche innen tangierenden Bogens, weil sich zwischen der ebenen Fläche und der Übergangsfläche an der Nahtstelle immer ein Knickwinkel ausbildet. Auf diese Weise ergibt sich entlang der Nahtstelle ebenfalls eine Aufnahmetasche, in die von der Dresch- oder Einlegetrommel Erntegut eingefördert werden kann. Diese Aufnahmetaschen bieten prinzipiell dieselben Vorteile die bereits oben beschriebenen Aufnahmetaschen. Die Schluckfreudigkeit einer solchen Anordnung lässt sich erhöhen, wenn das Bodenblech unterhalb der Dresch- oder Einlegetrommel beginnt und bis an die Vorderkante des in rechteckiger Geometrie ausgebildeten Rotorgehäuses heranreicht.

Die Erfindung wird nun anhand von Ausführungsbeispielen näher beschrieben. Es zeigen:
- Fig. 1: einen Mähdrescher in der Seitenansicht,
- Fig. 2: den Blick von vorn in Gutflussrichtung auf die Übergabezone,
- Fig. 3: die Übergabezone im Halbschnitt nach der Linie III-III der Fig. 2,
- Fig. 4: eine perspektivische Darstellung der Übergabegehäuses ohne Rotoren.
- Fig. 5: eine Seitenansicht der Übergabezone

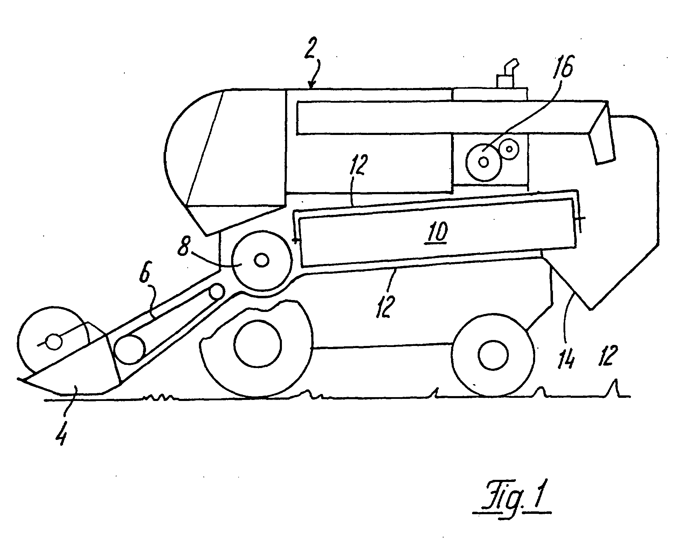

In Fig. 1 ist ein Mähdrescher 2 gezeigt mit einem Fahrwerk, einem Rahmen, einem Schneidwerk 4 und Schrägförderer 6 zur +Erntegutaufnahme und Beförderung und einer Dresch- oder Einlegetrommel 8, einem Trennrotor 10, der in einem Rotorgehäuse 12 rotierend antreibbar gelagert ist, sowie einer Ablagerutsche 14 zur Bearbeitung und Abgabe des Ernteguts. Außerdem ist ein Motor 16 vorhanden, durch den der selbstfahrende Mähdrescher sowie seine Arbeitsorgane angetrieben werden.

Bei derartigen Mähdreschern sind verschiedene Bauformen bekannt. So gibt es reine Axialmähdrescher, die in einem Rotorgehäuse das Erntegut mittels eines Rotors dreschen und trennen. Um die Übergabe des Ernteguts vom Schrägförderer in das Rotorgehäuse störungsfrei zu gewährleisten, ist dem Rotorgehäuse häufig eine nach dem Tangentialflussprinzip arbeitende Einlegetrommel vorgeschaltet, die entweder nur das Erntegut weiterbefördert oder auch bereits drischt. Daneben gibt es Mähdrescher, die das Erntegut vom Schrägförderer übernehmen, in einer nach dem Tangentialflussprinzip arbeitenden Drescheinrichtung ausdreschen und den Rotor im Rotorgehäuse ausschließlich zur Trennung der Körner vom Stroh verwenden. Allen beschriebenen Bauformen ist die Schwierigkeit gemeinsam, unter allen Erntebedingungen das Erntegut sicher in die Rotorgehäuse zu befördern. Insbesondere bei zwei nebeneinanderliegenden Trennrotoren ist es schwierig, den Gutstrom aufzuteilen, ohne dass es zu Verstopfungen im Gutfluß kommt. Wenn im folgenden von einer Dresch- oder Einlegetrommel 8 die Rede ist, so ist damit diejenige Trommel gemeint, die unmittelbar vor den Öffnungen zu den Rotorgehäusen angeordnet ist, in denen die Rotoren drehbar antreibbar gelagert sind. Mit dem Begriff Trennrotoren sind auch solche Rotoren gemeint, die zusätzlich zur Trennung der Gutfraktionen auch dreschen und mit entsprechenden Werkzeugen bestückt sind.

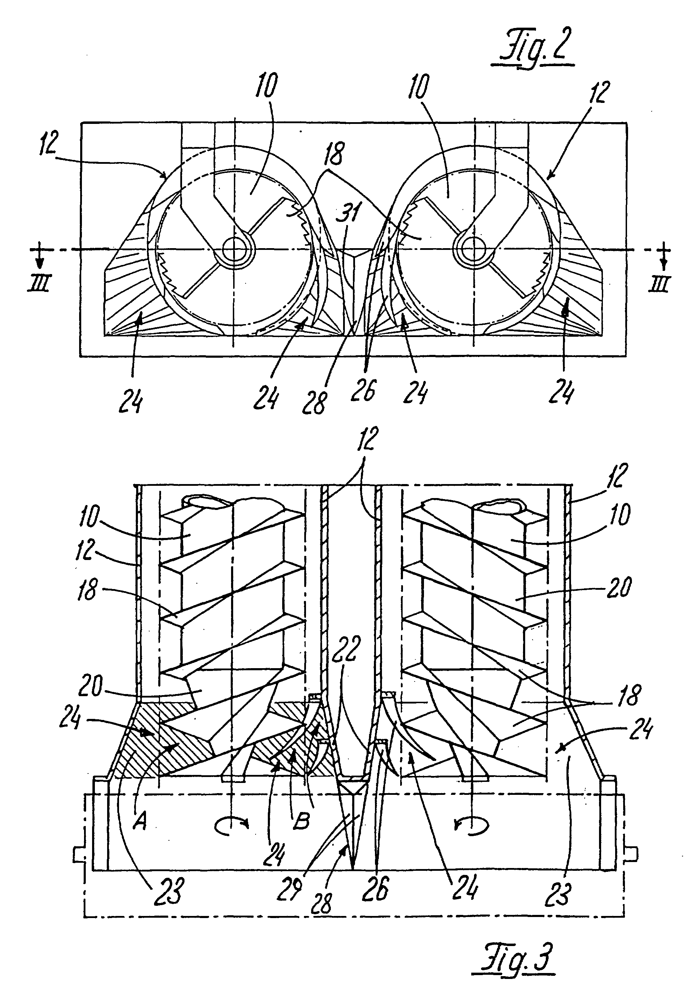

In Figur 2 ist die Übergabezone von vorn aus Richtung der Einlegetrommel zu sehen. Es ist gut erkennbar, dass praktisch die gesamte Breite der Annahmezone unterhalb der Schnittlinie III-III zugefördertes Erntegut ohne sofortige Gutumlenkung aufnehmen kann. Die seitlich und unterhalb der Trennrotoren 10 angeordneten Aufnahmetaschen sind an den durch Striche skizzierten Kantlinien der Übergangszone erkennbar. Mit einem entsprechenden Werkzeug könnte die Oberfläche der Übergangszone auch glatt gerundet ausgebildet werden. Es ist gut erkennbar, dass sich die gerundeten Leitbleche in der Übergangszone von den außen liegenden Eckpunkten nach hinten und innen zur Rotorgehäuseöffnung hin verbreitern

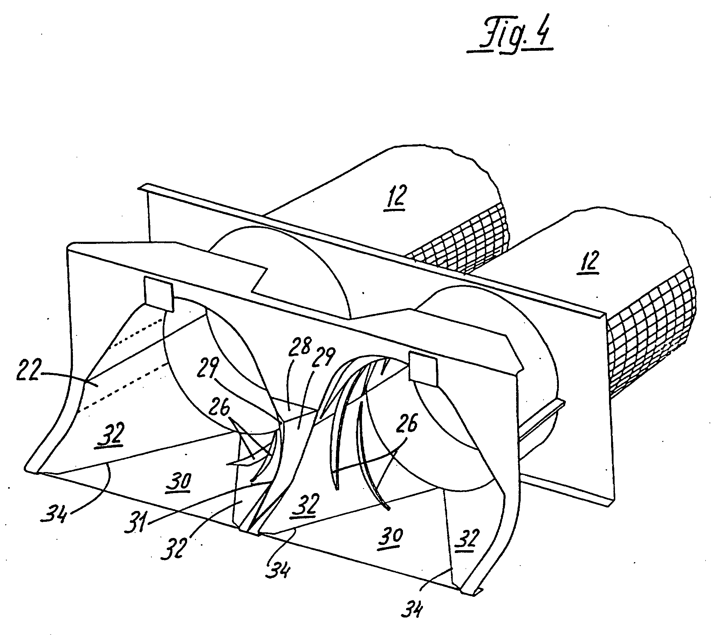

In Figur 3 ist in Schnittdarstellung von oben betrachtet eine Übergabezone dargestellt. Vor den Zuführöffnungen zu den Trenngehäusen 12 mit den darin gelagerten Trennrotoren 10 ist mit Strich-Punktlinien der Außenumriss einer Dresch- oder Einlegetrommel 8 gezeigt. Die Dresch- oder Einlegetrommel 8 fördert das Erntegut unterschlächtig in den Wirkbereich der Trennrotoren 10, die mit Förderwerkzeugen 18 in Form von Schneckenblechen besetzt sind. Der Trennrotor 10 weist einen rohrartigen Rotorkern 20 auf, der sich in seinem vorderen Teil konisch verjüngt. In dieser Zone nimmt die Steghöhe der Förderwerkzeuge entsprechend dem Konuswinkel zu, so dass eine im wesentlichen zylindrische Außenkontur beibehalten wird. Dabei wäre es auch vorstellbar, dass sich die Außenkontur geringfügig nach vorn hin aufweitet oder verringert, ohne dass es für die beanspruchte Erfindung von Belang wäre.

Das Rotorgehäuse 12 weist in seinem vorderen Bereich Seitenbleche 22 auf, die in einer horizontalen Lage in Gutflussrichtung - also nach hinten - gesehen konvergierend zum zugeordneten Trennrotor 10 hin angeordnet sind. In der Darstellung in Fig. 3 sind beide Seitenbleche 22 eines Rotorgehäuses 12 konvergierend dargestellt, erfindungsgemäß kann jedoch auch nur eines der Seitenbleche 22 konvergierend ausgeführt werden. Das Konvergenzmaß und mittelbar auch der Konvergenzwinkel sind wesentlich abhängig von der Breite der Dresch- oder Einlegetrommel 8, den Durchmessern der Trennrotoren 10 und dem Abstand zwischen Hüllkreis der Trennrotoren 10 und den Rotorgehäusen 12 und dem sich daraus ableitenden Durchmesser der Rotorgehäuse 12 Der Konvergenzwinkel ist abhängig vom Konvergenzmaß sowie der Tiefe der Annahmezone 24. Das von den Seitenblechen 22 realisierte Konvergenzmaß kann ganz oder teilweise die Differenz zwischen der Breite der Dresch- oder Einlegetrommel 8 und der Summe der Baubreite der beiden Rotorgehäuse 12 beseitigen. Der Fachmann ist dazu in der Lage, aus diesen Werten eine für seine Anwendung zweckmäßige Gestaltung auszuwählen.

Die Schnittdarstellung der Fig.3 verläuft nach der Linie III - III in Figur 2 und zeigt die Übergabezone etwa in Höhe der Drehachse der Trennrotoren 10, bei einer tieferen horizontalen Lage des betrachteten Schnitts ergäben sich dem geringeren Rotordurchmesser entsprechend angepasste Geometrien der Seitenbleche 22. Wenn die Seitenbleche 22 eines Rotorgehäuses aus einem einzigen Stück Blech geformt sind, bezeichnet der Begriff Seitenblech natürlich nur die in einer horizontalen Lage seitlich zur Drehachse des Trennrotors 10 angeordneten Teile des Blechstücks, das dann nach unten hin in Übergangszonen und ein Bodenstück 23 übergeht.

Bei einer solchen Ausgestaltung bildet sich in der betrachteten horizontalen Lage zwischen einem Seitenblech 22 und dem gegenüberliegenden Mantel des konischen Rotorkerns 20 jeweils eine Annahmezone 24. Zur Verdeutlichung sind bei einem der Trennrotoren 10 die Zonen 24 in der Fig. 2 durch Schraffur kenntlich gemacht. Diese Annahmezone 24 wird nur etwa hälftig vom Förderwerkzeug 18 erfasst. Eine vergleichbare Annahmezone ist auch an 3 weiteren Stellen erkennbar. Durch den nicht vom Förderwerkzeug 18 erfassten Bereich kann Erntegut zunächst in die Annahmezone und von dort seitlich in einen vom Förderwerkzeug 18 erfassten Bereich gelangen, wie durch den Pfeil angedeutet.

Auf der Innenseite des Seitenblechs 22, an dem sich der zugeordnete Trennrotor 10 aufwärts rotierend entlangbewegt, sind jeweils zwei Leitschienen 26 gezeigt, die in einem steilen Winkel nach oben gerichtet sind. Die Leitschienen 26 sind an ihrer Spitze schlank und erheben sich im weiteren Verlauf zunehmend. Wie die Pfeile B zeigen, wird dadurch das Erntegut veranlasst, sich nach oben und in den förderwirksamen Bereich der Förderwerkzeuge 18 zu bewegen. Dort, wo der Trennrotor das Erntegut nach unten wegdrückt (Pfeil A), kann auf solche Leitschienen 26 verzichtet werden.

Den beiden mittleren Seitenblechen 22 ist ein Trennkeil 28 bündig, jedoch lösbar vorgeordnet, dessen seitliche Flanken 29 die Flachen der Seitenbleche 22 bereichsweise fortsetzen und zu einer Keilkante 31 zusammenführen, diese ist dem Hüllkreis der Dreschoder Einlegetrommel 8 angepasst und erhebt sich bis etwa in Höhe der Drehachsen der Trennrotoren 10. Eine solche Anordnung des Trennkeils 28 erlaubt es, die Dresch- oder Einlegetrommel 8 sehr dicht an die Forderwerkzeuge 18 zu positionieren, was eine sehr bauraumsparende Anordnung und eine gute Förderwirkung ergibt.

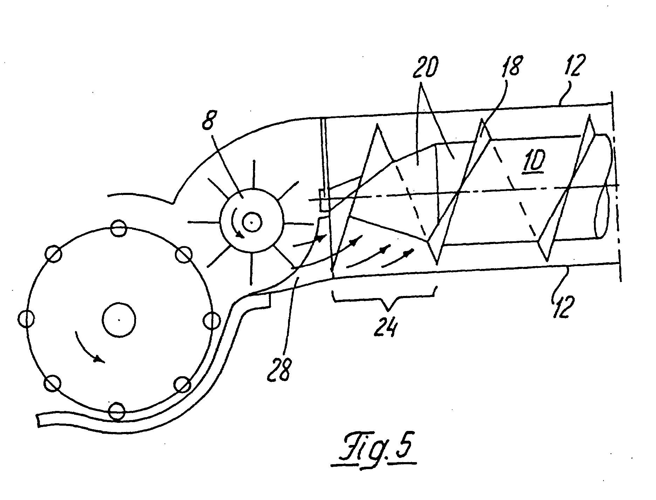

Anhand der Fig. 4 ist ersichtlich, welche Zone mit dem Begriff "Seitenblech 22" gemeint ist. Als Seitenblech ist in etwa diejenige Zone zu verstehen, die in Fig. 4 zwischen den gepunkteten Linien liegt. Das Bodenblech besteht aus der dreieckig gezeigten ebenen Fläche 30, die auch trapezförmig ausgebildet sein kann. Wichtig ist, dass die breite Basis vorn liegt und sich das Dreieck oder Trapez nach hinten hin verjüngt und schmaler wird. Die Seitenbleche 22 und die ebene Fläche 30 werden durch die Übergangsflächen 32 miteinander verbunden, die seitlich hochgebogen oder gekantet sind und sich in ihrer Fläche nach hinten hin zunehmend verbreitern. Auf diese Weise bilden sich Nahtstellen 34 aus, die in ihrer Richtung auf den Querschnitt des Trenngehäuses zulaufen. Eine in der Länge gestreckte Zuführzone kann ausgebildet werden, wenn das Bodenblech bis unter die Dresch- oder Einlegetrommel reicht und sich bis an die Vorderkante des Rotorgehäuses erstreckt.

In Figur 5 ist erkennbar, wie das Erntegut von der Dresch- oder Einlegetrommel 8 seitlich am Trennrotor 10 vorbei in die Aufnahmetaschen gefordert und von dort aus vom Trennrotor 10 mitgenommen und in eine radiale Förderbewegung überführt. Dies geschieht vorzugsweise beidseitig von beiden Trennrotoren. Auch ist gut die relative Höhenlage von Dresch- oder Einlegetrommel 8 relativ zur Höhenlage der Trennrotoren 10 zu sehen. Bei der gezeigten Anordnung ist sichergestellt, dass das Erntegut vorzugsweise das Erntegut in den Bereich zwischen Drehachse der Trennrotoren und dem Bodenblech fördert, in dem die ausgebildeten Aufnahmetaschen am schluckfreudigsten sind.

### Selbstfahrender Mähdrescher

- 2 -: Mähdrescher
- 4 -: Schneidwerk
- 6 -: Schrägförderer
- 8 -: Einlegetrommel
- 10 -: Trennrotoren
- 12 -: Rotorgehäuse
- 14 -: Ablagerutsche
- 16 -: Motor
- 18 -: Förderwerkzeuge (Schneckenbleche)
- 20 -: Rotorkern
- 22 -: Seitenbleche
- 23 -: Bodenstück
- 24 -: Annahmezone
- 26 -: Leitschienen
- 28 -: Trennkeil
- 29 -: Flanken
- 30 -: Fläche
- 31 -: Keilkante
- 32 -: Übergangsflächen
- 34 -: Nahtstellen

## Patentansprüche

1. Selbstfahrender Mähdrescher (2) mit einem Fahrwerk, einem Rahmen, Arbeitswerkzeugen zur Aufnahme, Beförderung, Bearbeitung und Abgabe des Ernteguts und Antriebsvorrichtungen zum Antrieb der Arbeitsorgane, die Arbeitsorgane weisen zumindest eine nach den Tangentialflussprinzip arbeitenden Dresch- oder Einlegetrommel (8) und zwei nachgeschaltete, nach dem Axialflussprinzip arbeitende Trennrotoren (10), die in diese umfassenden Rotorgehäusen (12) rotierend angetrieben gelagert sind, auf, und auf den Trennrotoren sind in ihrem in Gutflussrichtung gesehen vorderen Bereich Förderwerkzeuge (18) angebracht, die bei deren Rotationsbewegung eine im wesentlichen zylindrische Grundform der Außenkontur der mit den Förderwerkzeugen bestückten Trennrotoren ergeben, und der Mantel der Rotorkeme (20) verjüngt sich im vorderen Bereich konisch nach vom,
**dadurch gekennzeichnet,**
**daß** Seitenbleche (22) der Rotorgehäuse (12) im vorderen Annahmebereich in einer horizontalen Lage in Gutflussrichtung gesehen konvergierend zum zugeordneten Trennrotor (10) hin angeordnet sind und so im Verhältnis zum Rotorkern eine sich in Förderrichtung verengende Annahmezone bilden, in der nur ein Teilbereich dieser Annahmezone von den Förderwerkzeugen (18) förderwirksam erfassbar ist.

2. Selbstfahrender Mähdrescher nach Anspruch 1,
**dadurch gekennzeichnet,**
**daß** auf der Innenseite eines Seitenblechs (22), an dem sich der zugeordnete Trennrotor (10) aufwärts rotierend entlang bewegt, eine oder mehrere Leitschienen (26) angebracht sind, die in einem steilen Winkel nach oben gerichtet, an ihrer Spitze schlank und sich in Förderrichtung zunehmend erhebend ausgebildet sind.

3. Selbstfahrender Mähdrescher nach Anspruch 1 oder 2,
**dadurch gekennzeichnet,**
**daß** auf der Innenseite eines Seitenblechs (22), an dem sich der zugeordnete Trennrotor (10) abwärts rotierend entlang bewegt, keine Leitschienen (26) angebracht sind.

4. Selbstfahrender Mähdrescher nach einem der vorhergehenden Ansprüche,
**dadurch gekennzeichnet,**
**dass** den beiden mittigen Seitenblechen (22) ein längs angeordneter Trennkeil (28) vorgeordnet ist, der bereichsweise an den Hüllkreis der Dresch- oder Einlegetrommel (8) angepasst ist und sich vom Bodenbereich bis etwa in Höhe der Drehachsen der Trennrotoren (10) erstreckt.

5. Selbstfahrender Mähdrescher nach einem oder mehreren der vorhergehenden Ansprüche,
**dadurch gekennzeichnet,**
**dass** der Abstand zwischen dem Hüllkreis der Dresch- oder Einlegetrommel (8) und den auf den Trennrotoren (10) angeordneten Förderwerkzeugen (18) maximal bis zum Dreifachen der höchsten Erhebung des Trennkeils (28) über die benachbarten Leitblechflächen beträgt.

6. Selbstfahrender Mähdrescher nach einem oder mehreren der vorhergehenden Ansprüche,
**dadurch gekennzeichnet,**
**daß** die den Trennrotoren (10) vorgelagerte Dresch- oder Einlegetrommel (8) in ihrer relativen Höhenlage so vor den Trennrotoren (10) angeordnet ist, dass sie das Erntegut annähernd mittig in den Bereich zwischen den Rotationsachsen der Trennrotoren (10) und den bodenseitigen Zuführblechen der Übergabezone abfördert.

7. Selbstfahrender Mähdrescher nach einem oder mehreren der vorhergehenden Ansprüche,
**dadurch gekennzeichnet,**
**dass** ein die beiden Seitenbleche (22) eines Rotorgehäuses (12) verbindende Bodenblech aus einer dreieckigen oder trapezförmigen ebenen Fläche besteht, deren breite Basis vorn angeordnet ist und die bis in den Wirkbereich der Förderwerkzeuge (18) eines Trennrotors (10) schmaler wird, sowie sich seitlich an die ebene Fläche an einer Nahtstelle anschließende Übergangsflächen, die zum Anschluß an die Unterkante der Seitenbleche (22) nach oben gebogen oder gekantet sind und sich in Förderrichtung verbreitern.

8. Selbstfahrender Mähdrescher nach Anspruch 7,
**dadurch gekennzeichnet,**
**dass** die ebene Fläche und die seitlichen Übergangsflächen des Bodenblechs unterhalb der Dresch- oder Einlegetrommel (8) beginnen und bis an die Vorderkante des in rechteckiger Geometrie ausgebildeten Rotorgehäuses (12) heranreichen.

## Claims

1. A self-propelled combine harvester (2) comprising a chassis, a frame, working implements for picking up, conveying, processing and discharging the crop material and drive devices for driving the working members, the working members have at least one threshing or feed drum (8) operating on the tangential flow principle and two downstream-connected separating rotors (10) which operate on the axial flow principle and which are supported driven in rotation in rotor housings (12) enclosing them, and mounted on the separating rotors in their front region as viewed in the direction of flow of the crop material are conveyor implements (18) which in the rotary movement thereof produce a substantially cylindrical basic shape in respect of the external contour of the separating rotors provided with the conveyor implements, and the peripheral surface of the rotor cores (20) tapers conically forwardly in the front region,
**characterised in that**
side panels (22) of the rotor housings (12) are arranged in convergent relationship towards the associated separating rotor (10) as viewed in the direction of flow of the crop material in the front receiving region in a horizontal position and thus in relation to the rotor core form a receiving zone which narrows in the conveyor direction and in which only a partial region of said receiving zone is engageable by the conveyor implements (18) for a conveyor effect.

2. A self-propelled combine harvester according to claim 1 **characterised in that** mounted on the inside of a side panel (22) along which the associated separating rotor (10) moves rotatingly upwardly are one or more guide rails (26) which are directed upwardly at a steep angle and which are slender at their tips and which rise increasingly in the conveyor direction.

3. A self-propelled combine harvester according to claim 1 or claim 2 **characterised in that** no guide rails (26) are mounted on the inside of a side panel (22) along which the associated separating rotor (10) moves rotatingly downwardly.

4. A self-propelled combine harvester according to one of the preceding claims **characterised in that** arranged in front of the two central side panels (22) is a longitudinally arranged separating wedge (28) which is adapted region-wise to the envelope circle of the threshing or feed drum (8) and extends from the bottom region to approximately the height of the axes of rotation of the separating rotors (10).

5. A self-propelled combine harvester according to one or more of the preceding claims **characterised in that** the spacing between the envelope circle of the threshing or feed drum (8) and the conveyor implements (18) arranged on the separating rotors (10) is at a maximum up to three times the greatest height of the separating wedge (28) above the adjacent guide panel surfaces.

6. A self-propelled combine harvester according to one or more of the preceding claims **characterised in that** the threshing or feed drum (8) which is mounted in front of the separating rotors (10) is so arranged in front of the separating rotors (10) in its relative heightwise position that it conveys the crop material away approximately centrally into the region between the axes of rotation of the separating rotors (10) and the bottom feed panels of the transfer zone.

7. A self-propelled combine harvester according to one or more of the preceding claims **characterised in that** a bottom panel connecting the two side panels (22) of a rotor housing (12) comprises a triangular or trapezoidal flat surface whose wide base is arranged forwardly and which becomes narrower into the operative region of the conveyor implements (18) of a separating rotor (10), and transitional surfaces which laterally adjoin the flat surface at a seam location and which are tilted or bent upwardly for connection to the lower edge of the side panels (22) and increase in width in the conveyor direction.

8. A self-propelled combine harvester according to claim 7 **characterised in that** the flat surface and the lateral transitional surfaces of the bottom panel begin below the threshing or feed drum (8) and extend to the front edge of the rotor housing (12) which is of rectangular geometry.

## Revendications

1. Moissonneuse-batteuse (2) automotrice comportant un train roulant, un châssis, des outils de travail pour ramasser, transporter, traiter et délivrer le produit récolté et des moyens d'entraînement pour entraîner les organes de travail, les organes de travail comprenant au moins un tambour de battage ou tambour d'alimentation (8) qui travaille selon le principe dit à flux tangentiel et deux rotors de séparation (10) placés derrière celui-ci, qui travaillent selon le principe dit à flux axial et sont montés entraînés en rotation dans des carters de rotor (12) enveloppants, des outils de transport (18) étant prévus sur les rotors de séparation, dans la région antérieure de ceux-ci vu dans la direction d'écoulement du produit, outils de transport qui, en rotation, engendrent un contour extérieur à forme de base essentiellement cylindrique des rotors de séparation portant lesdits outils de transport et la paroi extérieure des corps de rotor (20), dans la région antérieure, se rétrécissant en forme de cône dirigé vers l'avant,
**caractérisée par le fait que**
des tôles latérales (22) des carters de rotor (12) dans la région d'entrée antérieure, dans une position horizontale vu dans la direction d'écoulement du produit, sont disposées de manière convergente en direction du rotor de séparation (10) associé pour former une zone d'entrée qui se rétrécit en rapport avec le corps de rotor dans la direction de transport et dans laquelle seule une portion de zone d'entrée coopère de manière active sur le plan du transport avec les outils de transport (18).

2. Moissonneuse-batteuse automotrice selon la revendication 1,
**caractérisée par le fait que** sur la face intérieure d'une tôle latérale (22) le long de laquelle le rotor de séparation (10) associé se déplace avec un mouvement de rotation ascendant, est/sont montée(s) une ou plusieurs barrettes de guidage (26) qui sont orientées vers le haut suivant un angle aigu, présentent une extrémité amincie et dont la hauteur augmente progressivement dans la direction de transport.

3. Moissonneuse-batteuse automotrice selon la revendication 1 ou 2, **caractérisée par le fait qu'**aucune barrette de guidage (26) n'est prévue sur la face intérieure d'une tôle latérale (22) le long de laquelle le rotor de séparation (10) associé se déplace avec un mouvement de rotation descendant,

4. Moissonneuse-batteuse automotrice selon une des revendications précédentes, **caractérisée par le fait que** devant les deux tôles latérales (22) médianes est disposé un bec-séparateur (28) longitudinal dont le profil est partiellement adapté au cercle enveloppe du tambour de battage ou d'alimentation (8) et qui s'étend depuis la région du fond jusqu'à environ la hauteur des axes de rotation des rotors de séparation (10).

5. Moissonneuse-batteuse automotrice selon une ou plusieurs des revendications précédentes, **caractérisée par le fait que** la distance entre le cercle-enveloppe du tambour de battage ou d'alimentation (8) et les outils de transport (18) disposés sur le rotor de séparation (10) est au maximum égale à trois fois la hauteur maximale du bec-séparateur (28) par rapport aux surfaces des tôles de guidage voisines.

6. Moissonneuse-batteuse automotrice selon une ou plusieurs des revendications précédentes, **caractérisée par le fait que** le tambour de battage ou d'alimentation (8) placé disposé en amont des rotors de séparation (10) occupe une position relative en hauteur devant les rotors de séparation (10) telle qu'il délivre le produit récolté sensiblement au milieu dans la région entre les axes de rotation des rotors de séparation (10) et les tôles d'entrée côté fond de la zone de transfert.

7. Moissonneuse-batteuse automotrice selon une ou plusieurs des revendications précédentes, **caractérisée par le fait qu'**une tôle de fond qui relie les deux tôles latérales (22) d'un carter de rotor (12) est formée d'une surface plane de forme triangulaire ou trapézoïdale, dont la grande base est disposée côté avant et dont la largeur diminue jusque dans la région d'action des outils de transport (18) d'un rotor de séparation (10), sur le côté, des surfaces de transition qui sont liées à la surface plane par des cordons de soudure, étant courbées ou pliées vers le haut a des fins de raccordement au bord inférieur des tôles latérales et s'élargissant dans la direction de transport.

8. Moissonneuse-batteuse automotrice selon la revendication 7,
**caractérisée par le fait que** la surface plane et les surfaces de transition latérales de la tôle de fond commencent en-dessous du tambour de battage ou d'alimentation (8) et s'étendent jusqu'au bord inférieur du carter de rotor (12) de forme rectangulaire.
